# FASCICULE DE BREVET EUROPEEN

(11) **EP 2 359 302 B1**
(45) Date de publication et mention de la délivrance du brevet: **16.10.2019**
(21) Numéro de dépôt: 09760915.0
(22) Date de dépôt: 02.12.2009
(51) Int. Cl.: G06F 21/53

(54) **EQUIPEMENT DE SECURITE**
SICHERHEITSVORRICHTUNG
SECURITY APPARATUS

(30) Priorité: 05.12.2008 FR 0806839
(43) Date de publication de la demande: 24.08.2011
(73) Titulaire: THALES, 92400 Courbevoie (FR)
(72) Inventeur: MAXIMILIEN, Benoît, F-78150 Le Chesnay (FR); FREREBEAU, Laurent, F-78000 Versailles (FR); WEBER, Eric, F-95830 Cormeilles En Vexin (FR); LACROIX, Jean-Marc, F-91570 Bievres (FR)
(74) Mandataire: Dudouit, Isabelle
(86) Numéro de dépôt international: PCT/EP2009/066256
(87) Numéro de publication internationale: WO 2010/063768

(56) Documents cités:
- EP-A- 1 480 124
- WO-A-2007/106565
- US-A1- 2003 065 676

## Description

L'invention se situe dans le domaine de la sécurité des systèmes d'information. Elle concerne la conception d'équipements de sécurité, en tenant compte de leurs contraintes spécifiques (type et qualité de l'isolation, contrôle des flux, ...) au moyen d'une couche de virtualisation. Le système selon l'invention est destiné à être disposé entre des domaines ayant des niveaux de sensibilité différents les uns des autres.

L'invention s'applique, par exemple, au cloisonnement de traitements sensibles, au contrôle de flux de données échangées entre des domaines de niveaux de sécurité différents, et à la restriction d'accès à des ressources sensibles telles qu'un composant cryptographique, un moyen de communication, un périphérique de stockage, etc.

La conception d'équipements sécurisés nécessite de séparer les informations de niveaux de sensibilité différents et d'éviter qu'elles puissent être mélangées ou modifiées, ou que leur traitement soit perturbé.

Ces informations peuvent être privées ou publiques, rouges ou noires, sensibles ou partagées, claires ou chiffrées.
La séparation de ces données nécessite une séparation des traitements qui les manipulent, ainsi que des espaces de stockage (persistants, volatiles, temporaires, ...) qui les contiennent. La tâche se révèle ardue si l'on considère que les moyens utilisés pour supporter ces traitements (processeurs, mémoires, ...) sont des systèmes physiques qui 1) ont des effets de bord sur leur environnement (rayonnement électromagnétique, consommation électrique, ...), 2) ont des caractéristiques intrinsèques (caches mémoires, éléments de prédiction de traitement, ...) susceptibles de maintenir de l'information sensible entre deux traitements et, 3) utilisent des matériaux qui peuvent présenter une certaine rémanence de l'information après une mise hors tension.

Dans le domaine de la sécurité, l'art antérieur propose des solutions techniques basées sur des principes de séparation matérielles, ou des solutions logicielles de faible résistance aux tentatives d'intrusion (et donc, de faible niveau de sécurité). Les solutions actuelles, telles que les architectures matérielles rouge-noire, connues de l'Homme du métier, sont coûteuses à mettre au point et à produire. Elles nécessitent la conception et l'évaluation de plusieurs cartes matérielles et, en général, d'un environnement logiciel complexe pour synchroniser les échanges entre cartes, séparer les fonctions d'administration, etc... Ces solutions manquent de souplesse du fait qu'il s'agit de solutions matérielles, forcément moins faciles à corriger/mettre à jour en cas de correction d'anomalies informatiques (plus connues sous le terme « bug »).

Plusieurs industriels et laboratoires travaillent actuellement sur les technologies de virtualisation et, plus particulièrement, sur leurs problématiques sécuritaires spécifiques. Elles sont aujourd'hui largement utilisées par les gestionnaires de serveurs et de façon plus anecdotique sur les postes de travail, en général pour des besoins de développement et de mise au point de logiciel. Elles sont encore peu utilisées pour des besoins de sécurité.

La demande de brevet WO 2008/108868 divulgue un système et une méthode pour implémenter une plate-forme virtuelle de sécurité. Ce brevet s'attache à créer des compartiments logiques sur un serveur et à associer chacun d'eux à un réseau ou à un sous-réseau de communication, avec pour objectif de séparer les traitements et les données spécifiques de ces réseaux. Ce brevet est lié à une problématique réseau, et plus spécifiquement à une problématique de séparation des espaces d'adressage et de routage.

La demande de brevet WO 2007/106565 décrit une architecture de type « request box » en tête de pont.

L'utilisation d'une technologie de virtualisation ne permet toutefois pas de résoudre à elle seule un ou plusieurs des problèmes précités. Elle peut, par contre, permettre de systématiser la prise en compte de moyens physiques ou de procédures de sécurité spécifiques, et de faciliter l'évaluation sécuritaire d'un équipement sensible : la prise en compte des contraintes sécuritaires d'un équipement se trouve reportée non plus sur le système d'exploitation (ou OS), potentiellement important et complexe, et les applications manipulant des données sensibles, mais sur la technologie de virtualisation en charge de piloter les ressources matérielles, de restreindre l'accès à celles-ci et d'appliquer un cloisonnement (logique et éventuellement physique) fort entre les différents traitements et les flots d'informations. Au final, en utilisant une technologie de virtualisation, la problématique du concepteur d'un équipement sensible devient une problématique de conception sécurisée d'un logiciel de « bas niveau » et de petite taille, et non plus la sécurisation d'un énorme amalgame de lignes de code. Pour mémoire, la virtualisation est une couche logicielle qui se place entre le matériel ou hardware et le système d'exploitation et l'application client. Elle permet de compartimenter l'application avec un OS en blocs indépendants logiquement les uns des autres ; autrement dit la virtualisation permet de réaliser un cloisonnement « étanche » ou maitrisé entre les compartiments et faire en sorte que seuls les flux autorisés puissent intervenir entre les blocs. La technologie de virtualisation a été imaginée initialement pour mutualiser et permettre un partage équitable et transparent de ressources matérielles (processeurs, ressources moyens de stockage et de communication, ...) *a priori* coûteuses et sous-utilisées. Cette technologie, dite de « virtualisation », permet à plusieurs environnements logiciels dédiés à des usages ou à des utilisateurs différents de partager les mêmes ressources matérielles, tout en donnant l'impression à chacun de ces environnements d'être les seuls bénéficiaires des ressources de la plate-forme qui l'accueille. En cela, les technologies de virtualisation se distinguent des systèmes d'exploitation : un OS multitâche permet à plusieurs applications de s'exécuter simultanément sur la même plate-forme matérielle, sans chercher à leur donner l'impression qu'elles sont les seules utilisatrices de la plate-forme.

La présente innovation s'attache à la description d'une architecture compartimentée de confiance qui permet de cloisonner, échanger, traiter et filtrer des informations, éventuellement (et pas seulement) liées à des réseaux de communication, au moyen d'une technologie : la virtualisation. L'équipement qui implémente cette nouvelle architecture permet de séparer, dissocier des informations de niveaux de sensibilité différents car appartenant à des domaines indépendants.

L'objet de la présente invention concerne un équipement de sécurité ES disposé à être positionné entre au moins un premier domaine ayant un premier niveau de sensibilité A et au moins un deuxième domaine ayant un deuxième niveau de sensibilité B, sachant que le niveau de sécurité A est différent du niveau de sécurité B, caractérisé en ce qu'il comporte au moins les éléments suivants :
- une couche matérielle physique H et plusieurs interfaces I permettant l'échange de données entre ledit équipement de sécurité et les différents domaines A, B, un flux de données étant émis du premier domaine ayant un niveau de sensibilité A, transite par la couche matérielle physique H et par une couche de virtualisation V, puis par un bloc sas et enfin arrive au deuxième domaine ayant un niveau de sensibilité B,
- la couche de virtualisation V est implémentée sur la couche physique H et disposée entre ladite couche physique H et au moins un ensemble constitué d'au moins trois blocs compartimentés, BLA, BLB, MDS, lesdits blocs compartimentés reposant sur la couche physique H et la couche de virtualisation, les au moins trois blocs compartimentés ne sont pas dans la couche de virtualisation, et lesdits blocs étant constitués d'au moins un des éléments pris parmi la liste suivante :
   - un logiciel réseau A, BLA, comportant l'ensemble des fonctions réseaux permettant de traiter des données de niveau de sécurité A,
   - un logiciel réseau B, BLB, comportant l'ensemble des fonctions réseaux permettant de traiter des données de niveau de sécurité B
   - un bloc logiciel Module de sécurité, MDS, ou sas disposé entre au moins un bloc de type BLA et au moins un bloc de type BLB, ledit module de sécurité étant adapté à contrôler les échanges de données entre lesdits blocs BLA et BLB, ledit module de sécurité comportant l'ensemble des transformations de sécurité, de filtrage ou de fonctions cryptographiques.
Les lettres A et B sont utilisées comme référence générique pour désigner des domaines ayant des niveaux de sécurité différents. L'expression « au moins un deuxième domaine de niveau de sécurité B », peut désigner un deuxième domaine de niveau de sécurité B, et un troisième domaine avec un niveau de sécurité C différent de B et A différent de C.

Un équipement de sécurité ES comporte, par exemple, les fonctions adaptées à gérer l'échange des flux de données entre les différents blocs de la manière suivante :
- les échanges entre le domaine A et le bloc logiciel BLA,
- les échanges entre le bloc logiciel BLA et un module de sécurité MDS,
- les échanges entre un module de sécurité MDS et le bloc logiciel BLB,
- les échanges entre le bloc logiciel BLB et le domaine B.
Ainsi, les échanges directs entre le domaine A et le domaine B sont interdits. Les échanges directs entre les blocs BLA et BLB sont prohibés en fonctionnement normal dudit équipement de sécurité.
Chacun des domaines A, B est en liaison avec un sous-réseau ou un réseau LANi, WANi, lesdits blocs logiciels BLA et BLB étant dans cet exemple d'application des blocs réseaux BRA, BRB.

Un module de sécurité MDS comporte, par exemple, une ou plusieurs des fonctionnalités choisies parmi l'une des suivantes : un chiffreur IP ou autre et/ou un pare-feu et/ou d'une diode et/ou de détection d'intrusion et/ou d'analyse de flux. De fait, le module MDS est un point de contrôle obligé de tous les flux qui transitent entre le domaine A et le domaine B.

L'équipement de sécurité selon l'invention peut comporter un nombre x de blocs de sécurité A, un nombre de modules de sécurité égal à x, un nombre y de blocs de sécurité de niveau B, avec A différent de B.

Le module de sécurité MDS est disposé de façon telle que le parcours des flux de données dans un équipement de sécurité ES est le suivant : le flux FI comprenant initialement des données sensibles en clair est un flux sortant partant du domaine B vers le domaine A, il passe à travers la couche physique H et la couche de virtualisation V, avant de transiter par le bloc réseau rouge, puis transmis au bloc de sécurité de cryptographie des flux sortants, les données chiffrées sont ensuite transmises au bloc réseau noir avant d'être transmise au domaine A et un flux Fil part du domaine A et transmis via la couche physique H et la couche de virtualisation V dans le bloc rouge, puis transmis au bloc de sécurité ou sas dans lequel les données sont déchiffrées.

L'équipement peut comporter un module administrateur du fonctionnement dudit équipement de sécurité.

Le nombre de bloc module de sécurité MDS est égal au nombre de niveau de sécurité ou au nombre de blocs de niveau de sécurité présents dans ledit équipement de sécurité.

Le nombre de niveau de sécurité est égal au nombre de niveau de bloc rouge.

L'invention vise un équipement de sécurité et son utilisation. Elle offre notamment les avantages suivants :
1) diminuer le coût de production des équipements sensibles,
2) faciliter leur évaluation (Exemple : Certification Critères Communs EAL),
3) donner plus de souplesse dans la gestion des éventuelles anomalies de conception ou d'implémentation.
L'équipement sécurisé selon l'invention permet de plus :
- de séparer les environnements logiciels qui ont des niveaux de confiance différents, de par l'origine du code source qui les constitue et du fait du nombre et de la nature des tests ayant permis de qualifier ces compartiments par exemple,
- de restreindre l'accès aux ressources sensibles (et notamment aux ressources cryptographiques) aux seuls compartiments qui en ont effectivement besoin,
- d'appliquer une politique de sécurité incluant des règles de contrôle d'accès, indépendamment de la nature et de la structure des compartiments supportés et donc indépendamment des systèmes d'exploitation.

L'invention sera mieux comprise et d'autres avantages apparaîtront à la lecture de la description détaillée faite à titre d'exemple non limitatif et à l'aide des figures parmi lesquelles :
- la figure 1 représente un schéma d'architecture d'un équipement sécurisé selon l'invention,
- la figure 2, une architecture dans le cas d'un équipement comprenant plusieurs niveaux de sécurité,
- les figures 3A et 3B, un équipement de sécurité intégré dans un poste client standard avec un seul niveau de sécurité et un équipement multi-niveaux,
- les figures 4A et 4B, deux exemples d'équipement de sécurité utilisé comme transit,
- la figure 5 le schéma emprunté par les flux de données dans le cas d'un système tel que celui décrit à la figure 1,
- la figure 6, le schéma du chemin emprunté par les flux dans le cas d'un équipement de sécurité multi-niveaux,
- les figures 7A et 7B, un exemple d'implémentation de l'équipement de sécurité dans un équipement cryptographique,
- la figure 8, un exemple d'implémentation concret,
- la figure 9, un exemple des détails des mécanismes d'assurance de l'exécution de la transformation de sécurité,
- la figure 10, un exemple de protection spatiale, mise en oeuvre dans le système selon l'invention,
- la figure 11, un autre exemple précisant les passerelles pouvant être utilisées,
- la figure 12, un exemple de protection temporelle,
- la figure 13, un exemple de système selon l'invention utilisé comme une passerelle,
- la figure 14, un exemple d'équipement de sécurité qui contient deux modules de sécurité où s'exécutent les mêmes traitements en parallèle avec un léger décalage temporel, et
- la figure 15, un exemple d'équipement de sécurité qui contient trois modules de sécurité avec un mécanisme de vote majoritaire.

Les exemples donnés dans la suite de la description sont relatifs à des blocs réseaux. Sans sortir du cadre, de l'invention les blocs réseaux pourraient être remplacés par des blocs logiciels notés BLs, ces derniers pouvant être adaptés à gérer une Interface Homme Machine, des disques durs ou encore des fonctions réseaux.

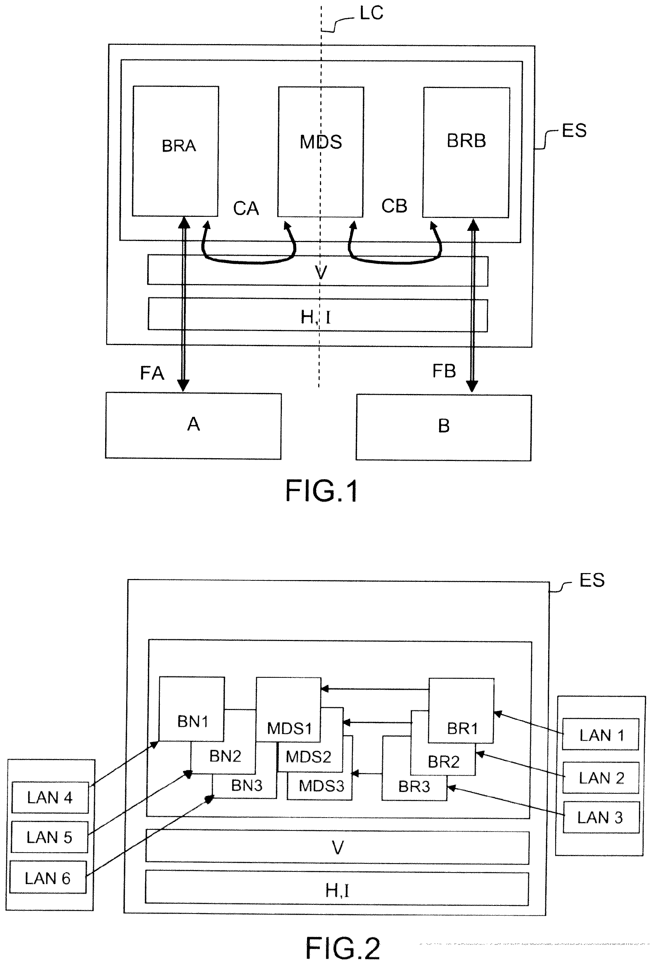

La figure 1 représente un exemple d'équipement de sécurité ES composé d'un ensemble de blocs compartimentés comprenant chacun une application indépendante avec son système d'exploitation. Sur la figure 1 sont représentés un premier bloc de réseau BRA de niveau de sécurité A, un second module de réseau BRB de niveau de sécurité B, un module de sécurité MDS ayant par exemple une fonction de cryptage des données ou toute autre fonction adaptée à contrôler, filtrer, les données. Le module de sécurité ou sas est un sas de sécurité qui empêche toute communication directe de données entre deux niveaux de sécurité différents ; il se place en coupure d'un ou plusieurs flux et il applique des traitements de sécurité (inspection, dépollution, contrôle d'accès, chiffrement, étiquetage, imputation,...) à chacun de ces flux en s'aidant si nécessaire de ressources de sécurité (élément de stockage, composant cryptographique, interface de confiance, ...) dont l'accès lui est réservé; sa relative complexité, ainsi que la possibilité de pouvoir faire évoluer son contenu (pour ajouter ou supprimer des fonctionnalités, par exemple) justifie qu'il soit séparé de la technologie de virtualisation sous-jacente, plus ciblée sur la mutualisation et le contrôle d'accès aux ressources matérielles ; son rôle sécuritaire, ainsi que le besoin d'une évaluation sécuritaire selon des critères d'assurance élevés justifient qu'il soit séparé des blocs logiciels à qui il offre ses services (BRA et BRB dans le cas de la figure 1). Ainsi sur la figure l'ensemble composé des trois blocs compartimentés BRA, BRB et MDS) est implanté sur une couche logicielle de virtualisation V, cette couche étant implémentée sur du matériel physique plus connu sous l'abréviation anglo-saxonne Hardware et les interfaces I permettant la communication de chacun des blocs avec l'extérieur, par exemple le réseau A et le réseau B sur la figure 1.

La circulation des flux de données entre les différents blocs BRA, BRB se fait de la manière suivante. Le bloc BRA échange des données ou des informations via la couche logicielle de virtualisation V et la couche physique H vers un réseau externe A qui correspond à un domaine de niveau de sécurité différent de B, au moyen d'une liaison ou selon un chemin, FA. Le même bloc BRA communique avec le module de sécurité MDS par l'intermédiaire d'une liaison CA. Ce bloc BRA ne communique jamais directement avec le bloc BRB dans le cas d'un fonctionnement normal de l'équipement de sécurité. Les échanges de données sont toujours filtrés ou contrôlés par le sas de sécurité.

Le bloc BRB échange des données avec un réseau externe B de niveau de sécurité B différent de A par l'intermédiaire de la couche logicielle de virtualisation et de la couche physique et via une liaison FB. Ce même bloc BRB échange des données avec le bloc de sécurité MDS via une liaison CB. En cas de fonctionnement normal, le bloc BRB n'a pas d'échanges directs avec le bloc BRA.

Chaque bloc ou compartiment qui se situe au dessus de la couche de virtualisation est composé, par exemple, un système d'exploitation ou OS acronyme anglo-saxon Operating System ou « OS » propre (optionnel) et de son application client (programme de l'utilisateur). Chaque compartiment est bien évidemment indépendant fonctionnellement des autres (c'est le but de la virtualisation) : autrement dit, on est capable d'exécuter, d'arrêter ou rebooter dans chacun des compartiments les programmes qui y sont exécutés.

La solution proposée fournit ainsi une solution essentiellement logicielle qui garantit un niveau de sécurité élevé, ceci afin de se soustraire à l'obligation de proposer systématiquement une solution réalisée avec des éléments physiques compartimentés, aujourd'hui coûteuse et technologiquement limitée. L'utilisation de la couche de virtualisation est disposée entre la couche matérielle ou « hardware » et les compartiments logiciels composés d'un système d'exploitation et de l'application utilisateur. Ainsi, l'invention permet de concevoir des équipements sensibles tels que des chiffreurs IP, des chiffreurs d'artère dans des réseaux de communication, des pare-feux ou encore des ressources cryptographiques par exemple, à moindre de coût et avec un niveau de sécurité comparable (pourvu que la technologie de virtualisation et le matériel sous-jacent possèdent certaines propriétés essentielles) par rapport à une solution purement matérielle.

Ainsi, la technologie de virtualisation V est le point de passage obligé pour tout échange entre un composant logiciel et une ressource sensible d'une part, et entre deux composants logiciels d'autre part. Elle assure une maîtrise :
1) des flux entre composants logiciels et ressources matérielles en mutualisant les ressources de la couche physique entre plusieurs composants logiciels et en contrôlant l'accès à ces ressources (exemple : composant cryptographique), et
2) des flux entre composants logiciels. Elle autorise la communication entre au moins deux composants logiciels (ou blocs).
Autrement dit, cette technologie de virtualisation (couche V) applique :
* d'une part une politique d'isolation spatiale et temporelle des composants logiciels qui lui sont associés, et
* d'autre part une politique de sécurité (authentification, contrôle d'accès, restriction de débits, restriction des orientations de flux, imputation,...).

Par conséquent, la politique de sécurité appliquée par la technologie de virtualisation permet de réserver l'accès de certaines ressources matérielles à une ou plusieurs implémentations d'un composant (matériel ou logiciel) d'un type particulier, appelé «sas de sécurité » ou «module de sécurité (MDS) » qui contient les fonctions de sécurité qui sont le plus souvent complexes, spécifiques et critiques.

La figure 2 schématise une architecture d'équipement de sécurité selon la figure 1, comprenant plusieurs niveaux de sécurité. Dans cet exemple, on parle de blocs réseau rouges BRi de niveau de sécurité A qui constituent chacun individuellement une interface avec le domaine sensible auquel ils sont dédiés (par exemple un réseau local ou LAN privé LAN1, LAN2, LAN3) ; les données sont sensibles et circulent généralement en clair. Il est aussi question de bloc réseau dit noir BNi, qui forme l'interface avec le domaine public (par exemple un réseau étendu ou WAN Wide Area Network) ; les données sont soit chiffrées, soit non protégés. Cependant, on peut imaginer qu'il existe plusieurs domaines noirs BN1, BN2, BN3 connectés à plusieurs LANs, LAN4, LAN5, LAN6 de sensibilités inférieures aux domaines rouges. Les blocs MDS1, MDS2, MDS3 (ou bloc sécuritaire) ont notamment pour fonction de filtrer, analyser les seuls flux autorisés à circuler éventuellement après leur avoir fait subir un traitement cryptographique, une dépollution, une désensibilisation, termes communément utilisés par l'Homme du métier dans le domaine de la sécurité. Plus précisément, un bloc réseau rouge BRi va communiquer des données via un sas de sécurité MDSi à un bloc BNj (ou inversement mais toujours via un MDS).
Dans l'exemple de la figure 2, on retrouve les couches de virtualisation, ainsi que la couche physique de la figure 1. Le nombre de blocs rouges, pouvant présenter des niveaux de sécurité différents, BR1, BR2 ..., est au moins supérieur ou égal au nombre de blocs Sas ou blocs de sécurité (MDS1, MDS2, MDS3..., par exemple). Du côté des blocs noirs, il peut y avoir un ou plusieurs niveaux de sécurité.

La virtualisation est adaptée à l'usage du multi-niveaux :
Côté rouge : l'équipement peut traiter plusieurs flux de niveaux de sécurité différents connectés à plusieurs réseaux locaux, ou LANi différents. Dans ce cas, un niveau rouge est associé à un bloc sas MDS1.
Du côté noir, il est courant que le bloc noir BNi soit connecté à un seul domaine de sensibilité (tel qu'un réseau étendu ou un réseau public, dans certains contextes). Il peut de même y avoir un seul niveau noir ou bien plusieurs niveaux noirs pas forcément dans le domaine public.

Dans cet exemple, 6 réseaux locaux plus connus sous l'acronyme anglo-saxon « LANs » ont été représentés. Ils sont connectés à l'équipement sensible au travers d'un port Ethernet. Il est intéressant de noter que les LANs représentent des niveaux de sensibilités différents ou des niveaux de confiance différents (c'est à dire des niveaux de sensibilité identiques mais dont les informations sont de nature différente : exemple des informations de mêmes niveaux « secret » mais d'un pays A et d'un pays B qui ne souhaitent pas mélanger leur flux ce qui implique un niveau de confiance différent).

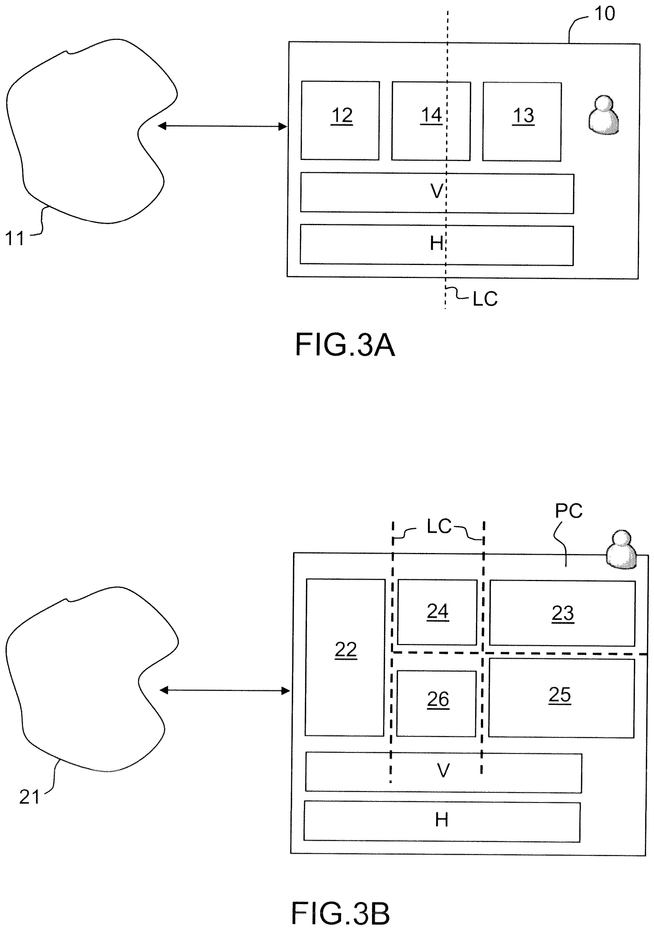

Les figures 3A et 3B représentent deux exemples d'équipement sécurisé selon l'invention ayant une fonction de terminal, par exemple dans une application réseau.

La figure 3A montre un exemple d'équipement sécurisé intégré dans un poste client standard 10 qui communique avec un réseau R. Le poste client qui peut être un PC utilisateur comprend une couche physique H, une couche de virtualisation V, un bloc réseau noir 12, un bloc interface homme machine qui constitue le bloc rouge 13, et un sas 14 séparant les deux blocs 12, 13, bloc réseau noir et le bloc réseau rouge.

La figure 3B, représente un exemple d'équipement sécurisé implémenté dans un poste client multi-niveaux. Le poste client 20 est en relation avec un réseau 21. Le poste client 20 comprend une couche matérielle physique H, une couche de virtualisation V, un réseau noir 22, une première interface homme machine (1^{er} client du serveur) ayant un niveau de sensibilité NR1, 23, en liaison avec un premier sas 24, une deuxième interface homme machine 25 (2^{e} client du serveur) ayant un deuxième niveau de sécurité NR2 communiquant avec un deuxième Sas 26. Les lignes en pointillés sur la figure 3B représentent la séparation logicielle des différents modules précités. Ainsi, le deuxième bloc 25 ne peut communiquer avec le premier bloc directement car ils n'ont pas le même niveau de sensibilité. Les sas ne communiquent pas entre eux.

Les compartiments sensibles sont multipliés par le nombre de niveaux gérés par le terminal.

La ligne de cloisonnement LC montre la séparation logicielle et fonctionnelle des domaines réseaux : autrement dit les informations de niveau de sensibilité différents ne se mélangent jamais. Cette séparation logicielle est aussi éprouvée qu'une séparation matérielle classique.

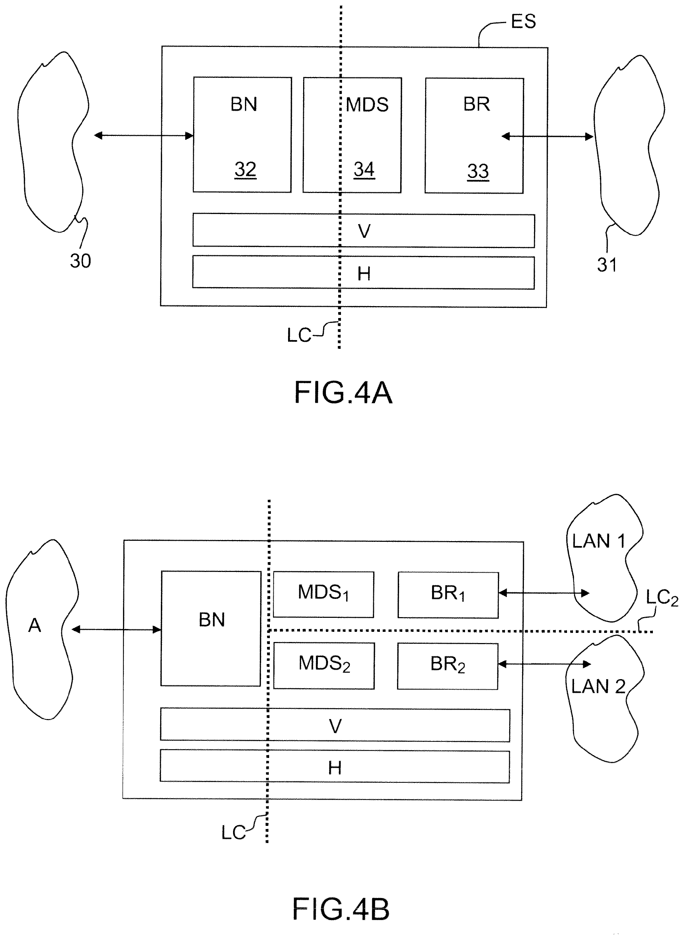

La figure 4A schématise un exemple d'équipement de sécurité utilisé comme une passerelle ou transit entre un premier réseau étendu connu sous l'acronyme anglo-saxon « WAN » 30 et un deuxième réseau local LAN, 31. L'équipement de sécurité est composé d'une partie noire 32, en liaison avec le WAN 30, d'une partie rouge 33, en liaison avec le LAN 31 et d'un sas 34 jouant le rôle de ligne de cloisonnement entre les deux réseaux de niveaux de sensibilité différents. L'équipement comprend toujours, la couche physique H et la couche de virtualisation V. Dans cet exemple, les communications avec les réseaux se font via les parties noire ou rouge. Une ligne de cloisonnement LC entre deux niveaux de sécurité est schématisée sur la figure: cette ligne de cloisonnement n'est pas physique. Cependant, elle indique que logiquement et fonctionnellement aucune donnée ne passe d'un domaine à l'autre sans passer par un sas (ou MDS : Module de Sécurité).

La figure 4B représente une application de la figure 4A pour une partie rouge comprenant plusieurs niveaux de sécurité. Dans ce cas à chaque bloc rouge de niveau de sécurité NRi correspond une partie sas Si. Les lignes en pointillés sur la figure représentent les lignes de cloisonnement LC, LC2 entre les réseaux ainsi formés qui présentent des niveaux de sensibilité différents.

La figure 4 B peut être considérée comme une passerelle ou un pare-feu, ou un chiffreur, ou une diode réseaux, etc...

Une partie Noire ou une partie rouge est composée des éléments suivants : un OS (Operating System), des drivers, des applications client qui offrent des services (avec des librairies éventuellement DLL (Dynamic Link Library), etc...). Les applications peuvent être diverses : un agent SNMP (Simple Network Management Protocol), une fonction de spanning tree, une fonction de coloration de flux, une fonction de gestion de stack IP (Internet Protocol), fonction de gestion QoS (Quality of Service), fonction ARP (Address resolution protocol), fonction NAT traversai (Network Address Translation), fonction de fragmentation, fonction d'aiguillage DSCP (Differentiated Services Code Point) fonction de gestion de congestion, fonction d'alarmes et de journalisation, fonction DHCP (Dynamic Host Configuration Protocol), fonction VLAN (Virtual Local Area Network), fonction de répartition de charges (load balancing), fonction de mobilité (Mobike), fonction de routage (RIP : Routing Information Protocol), OSPF (Open Shortest Path First), etc. en somme toutes les fonctions réseaux standards.

Dans la partie Module de Sécurité MDSi sont implémentées, notamment, les fonctions suivantes :
- des fonctions de filtrage (filtrage numéros de port, filtrage protocolaires, Antivirus, filtrage IP, IDS, etc...),
- ou des fonctions de cryptographiques ou de sécurité (chiffrement, déchiffrement, fonction protocole IPSEC connu de l'Homme du métier, fonction de compteur anti-rejeu, fonction de gestion de clés symétriques, fonction de certificats, fonction de traitement d'effacement d'urgence, fonction de sécurité d'anti-intrusion, etc.).

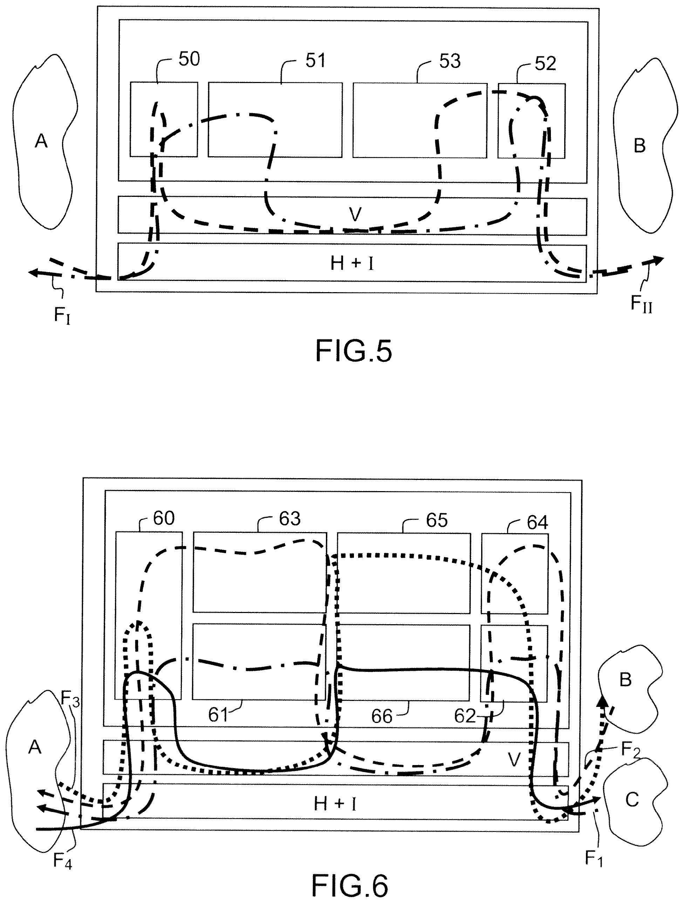

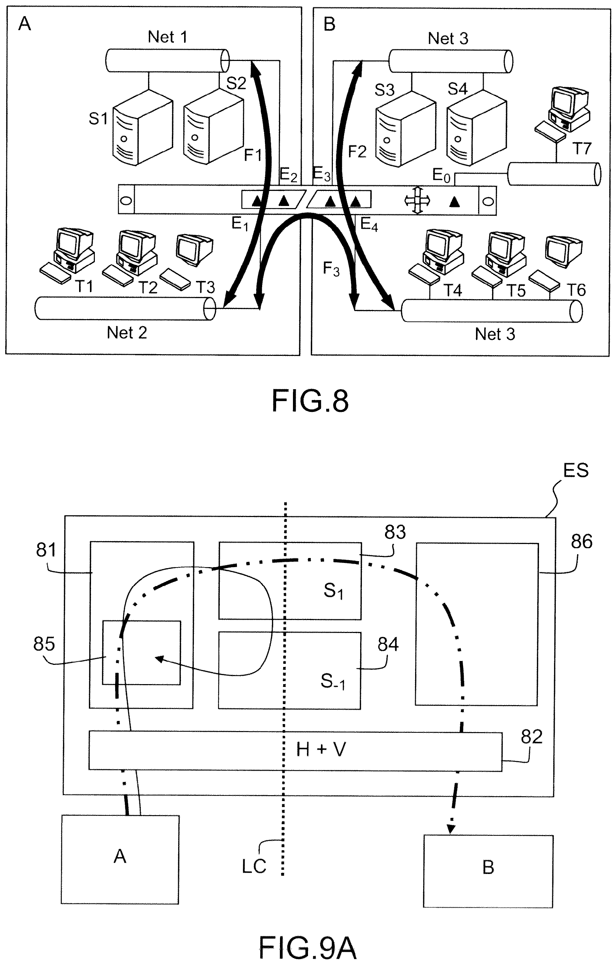

La figure 5 schématise le parcours des flux de données dans un équipement de sécurité tel que celui décrit à la figure 1 ou encore à la figure 4A. Dans cet exemple, l'équipement de sécurité est un chiffreur IP.
Le flux FI comprenant initialement des données sensibles en clair est un flux sortant partant du domaine B vers le domaine A. Il passe à travers la couche physique H et la couche de vritualisation V, avant de transiter par le bloc réseau rouge 52, puis transmis au bloc sas 51 de cryptographie des flux sortants, par exemple, ce bloc peut chiffrer les données du flux. Les données chiffrées sont ensuite transmises au bloc réseau noir 50 avant d'être transmise au domaine A. Le parcours des flux entrants se fait de la manière suivante : le flux FII part du domaine A et transmis via la couche physique H et la couche de virtualisation V dans le bloc rouge 52, puis transmis au bloc sas 53 dans lequel les données sont, par exemple, déchiffrées. Les données déchiffrées sont ensuite transmises au bloc rouge 52 avant d'être envoyées vers le réseau domaine B.
Le bloc noir comme le bloc rouge contient des fonctions réseaux connues de l'Homme du métier. Les modules cryptographiques ou module de sécurité (MDS) contiennent des fonctions de sécurité ou les fonctions critiques (tels que le chiffrement ou le déchiffrement).
A chaque passage d'un bloc rouge ou noir à l'autre, les flux passent au travers de la couche de virtualisation V. La décomposition des modules cryptographiques dans cet exemple d'application ou MDS en deux parties distinctes (chiffrement / déchiffrement) permet de séparer les flux entrants des flux sortants. Ceci a l'avantage d'améliorer la sécurité car chaque sas devient une diode dédiée à un sens unidirectionnel de flux de données (les fonctions se spécialisent) et d'augmenter aussi la sûreté de fonctionnement et d'autoriser des mécanismes d'autotest (voir figure 9 A).
Ainsi chaque MDS est alloué à un sens donné et chaque bloc BRi est dédié à un routage particulier suivant le sens du flux. Le bloc réseau BRi aiguille le message soit vers l'extérieur (le réseau LAN ou WAN auquel il est connecté) soit vers le bon bloc de sécurité MDS.
Les blocs réseaux BRi ne peuvent pas communiquer directement entre eux. Les modules de sécurité contenant les fonctions critiques de sécurité, la politique de sécurité, ils assurent les communications entre les blocs réseaux BRi.

La figure 6 représente le parcours suivi par des flux de données dans un équipement de sécurité avec plusieurs niveaux de sécurité différents tel que celui décrit à la figure 4B, par exemple.

Le parcours F1 représente un premier flux sortant partant du domaine C vers le domaine A. Le flux F1 parcourt le chemin suivant ; il passe par les couches matérielles et les interfaces physiques et de virtualisation pour ensuite passer dans le bloc réseau rouge 62. Après il est transmis à un premier cloc sas 61 au sein duquel les données sont par exemple chiffrées, les données chiffrées repassent par la couche de virtualisation V avant de passer à travers le bloc réseau noir 60 puis via la couche de virtualisation, ces données chiffrées sont transmises au réseau domaine A.

La ligne F2 représente le parcours d'un flux de données sortant partant du domaine B vers un réseau domaine A. Les flux de données passent via la couche physique H et de virtualisation au bloc réseau rouge 64. Elles sont ensuite transmises à un bloc sas 63 de chiffrement des données avant d'être transmises via la couche de virtualisation à un bloc noir 60. Les données chiffrées sont ensuite transmises via la couche de virtualisation et la couche physique au domaine C.

La flèche F3 correspond au parcours suivi par un flux entrant partant du domaine A et allant vers le domaine B. Le flux de données va être transmis via les couches physiques et de virtualisation vers le bloc noir 60, puis dans le bloc sas 65 afin que les données soit déchiffrées, par exemple. Les données déchiffrées peuvent être transmises via la couche de virtualisation et la couche physique au bloc réseau rouge 64, puis au réseau B via la couche de virtualisation et la couche physique.

La flèche F4 schématise le parcours d'un flux entrant partant du domaine A pour aboutir au domaine C. Les données du flux sont transmises du réseau A vers le bloc réseau noir 60 avant d'être déchiffrées dans le bloc sas 66. Les données déchiffrées sont ensuite transmises via la couche de virtualisation et la couche physique au bloc réseau rouge 62 avant d'être envoyées vers le domaine C via la couche de virtualisation et la couche physique.

Chaque communication entre deux blocs autorisés à communiquer entre eux passe obligatoirement par la couche de virtualisation qui garantie le cloisonnement et le contrôle de ses échanges entre les blocs. Les blocs réseaux contiennent les fonctions standards réseaux. Ils assurent les échanges entre l'extérieur et les MDS. Ils ne peuvent pas communiquer entre eux. Les blocs MDS ont toujours la fonction de sécurité précédemment décrite et assurent la communication entre les blocs réseaux BRi exclusivement.

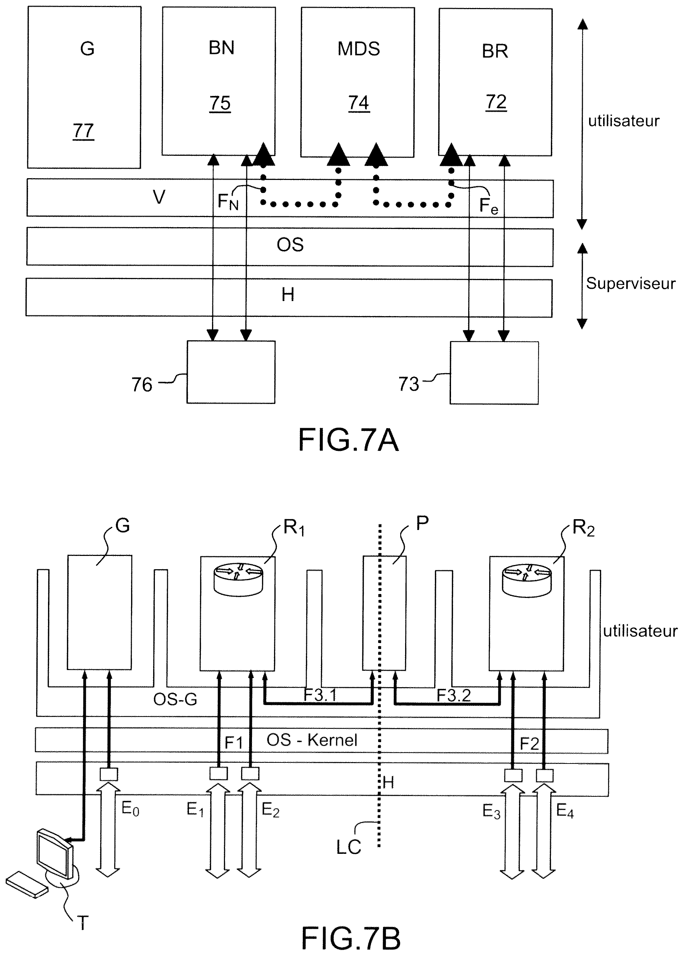

Les figures 7A et 7B schématisent deux exemples d'implémentation dans un équipement cryptographique.

Dans cet exemple, l'équipement cryptographique est composé d'une partie utilisateur 70 et d'une partie superviseur 71. L'équipement comprend une couche physique H, un noyau d'un système d'exploitation plus connu sous l'acronyme anglo-saxon micro kernel. Ce noyau est lui-même un logiciel, ayant notamment comme rôle de permettre la communication entre les différents éléments du système. Une couche de configuration ou de partition C propre à l'utilisateur. La technologie de virtualisation permet la création des compartiments logiques suivants :
- un compartiment rouge 72 traite des données en clair, non chiffrées. Ces données utilisateur sont à protéger, par exemple en confidentialité et en intégrité. Le compartiment rouge communique avec l'extérieur via 2 ports Ethernet 73 et les couches matérielles, de partitionnement et le micro kernel,
- un module de sécurité (MDS) ou sas cryptographique 74. Ce compartiment dit de confiance ou de sécurité assure notamment tous les traitements, les plus sensibles tels que la signature logicielle, le chiffrement ou encore le filtrage, requis lors du transfert d'informations entre un compartiment rouge et un compartiment noir,
- un compartiment noir 75 pour les données noires c'est-à-dire les données chiffrées. Ce compartiment noir est connecté au monde extérieur via 2 ports 76 Ethernet par exemple, et les couches matérielles, de partitionnement et le micro kernel,
- un compartiment 77 d'Administration ayant notamment pour des fonctions de maintenance, de mise à jour logicielle, de déport de supervision, de recherche d'anomalies de fonctionnement ou« debug », d'interface homme machine ou « IHM » afin d'afficher certains résultats partiels ou des états de fonctionnement de l'équipement. Son utilisation n'est pas limitative. Son isolation dans un compartiment spécifique au moyen de la technologie sous-jacente est justifiée par le niveau de confiance requis dans l'exécution des fonctions d'administration. De plus, ce compartiment n'effectue aucun traitement sur le flux de données (le trafic) entre le domaine A et le domaine B.

Chaque compartiment est indépendant des autres, du fait de la présence de la couche de virtualisation dans le cas de la figure 7A, la couche de virtualisation v est représentée par les couches du gestionnaire de partitionnement et l'hyperviseur qui alloue les allocations de ressources matérielles. Autrement dit, un compartiment peut avoir son propre système d'exploitation, être capable de redémarrer sans perturber les autres compartiments, avoir ses propres traitements et ses propres applications. La technologie de virtualisation met en oeuvre tous les mécanismes requis pour assurer cette indépendance, voire pour permettre à deux compartiments de s'échanger des informations de façon sécurisée. Ainsi, les échanges entre compartiments rouge et noir passent obligatoirement par le compartiment MDS, ces échanges étant schématisés par les flèches F_{R} et F_{N}.

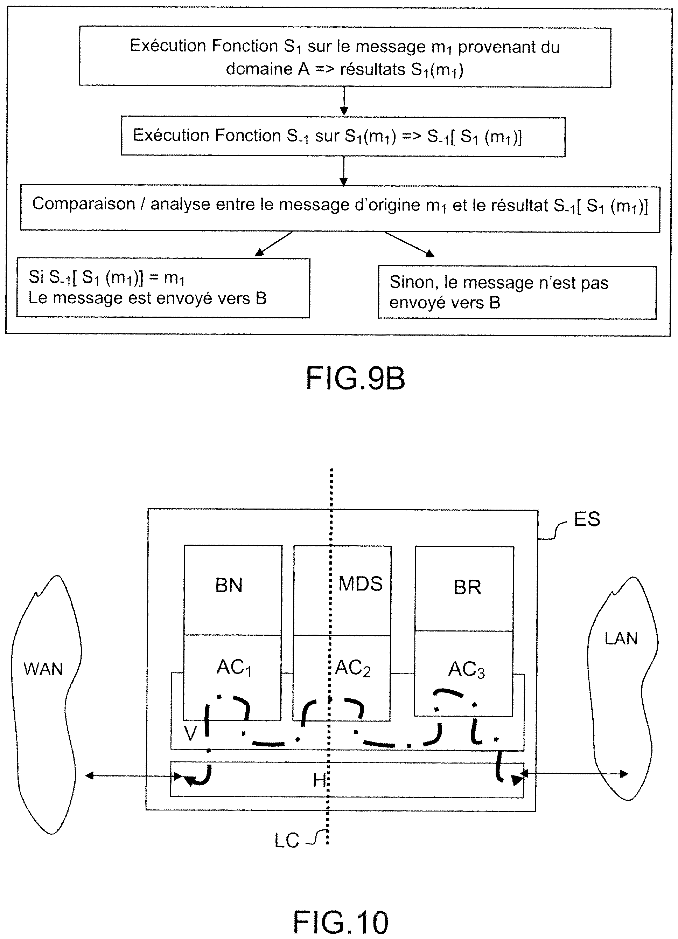

La figure 7B représente un exemple d'implémentation réelle de l'architecture d'un équipement conçu selon l'invention. Cette figure fait apparaître les ports Ethernet correspondants aux interfaces E1, E2, E3, E4 et E5. Ces interfaces sont connectées à une entité dénommée « hardware » constituant la plate-forme matérielle d'accueil de type COTS ou de type carte dédiée. Les éléments logiciels de la technologie de virtualisation sont présents à travers les deux entités de type « micro-kernel » OS-kernel et gestion de partition ou OS-G plus connu sous l'acronyme anglo-saxon « partition Manager ». Cet ensemble offre un service de système d'exploitation compartimenté pour différentes applications représentées via :
- Le routeur ou carte réseau R₁ et ses deux interfaces E₁ et E₂ conformes du schéma précédent, le flux de type F₁ circulant alors entre les interfaces E₁ et E₂ ;
- Le routeur R₂ ou carte réseau et ses deux interfaces E₃ et E₄ conformes du schéma de la figure 8B ;
- Le compartiment passerelle P, responsable du flux F₃ à travers les deux demi connexions de type F3.1, F_{N} (figure 7A) et F3.2 ou F_{R} (figure 7A) ;
- La gestion G qui implémente le terminal T associé à son interface E0. D'une part les propriétés d'ordonnancement temporel de la technologie de virtualisation permettent de privilégier un compartiment au détriment d'un autre en fonction des objectifs système à atteindre, d'autre part, l'isolation mémoire apportée par le cloisonnement statique mis en oeuvre dans les phases d'engineering et géré par le gestionnaire de partition permet d'obtenir une interconnexion de zones de sensibilité différentes (domaine A et domaine B sur la figure 9). Cette interconnexion est sous le contrôle exclusif du logiciel de la passerelle P plus connue sous l'acronyme anglo-saxon « gateway », lequel implémente une politique de sécurité définie. La capacité de mettre en oeuvre une passerelle logicielle exclusivement sur l'interface bas niveau du gestionnaire de partition ou plutôt à travers un système d'exploitation OS de type Linux ou autre ne dépend plus que des objectifs associés à la stratégie de certification de la passerelle et de la technologie de virtualisation associée.
Les deux figures 7A et 7B montrent les transferts via la couche de virtualisation et le nombre de commutations. On distingue ainsi deux types de flux :
- les flux qui relient les blocs réseaux et l'extérieur de l'équipement (flux de communication / inter équipement),
- Les flux qui relient les Blocs réseaux et les modules de sécurité MDS (flux intra équipement).
La ligne de cloisonnement LC est présentée afin de montrer qu'aucune communication n'est possible entre les deux domaines A et B en dehors des échanges autorisés dans le module de sécurité MDS (ou Gateway / sas).

La figure 8 présente un équipement de sécurité selon l'invention à travers un équipement passerelle avec système d'exploitation partitionné comportant une couche de virtualisation telle que celle décrite aux figures précédentes, qui correspond à un routeur logique contenant 5 interfaces physiques notées E1, E2, E3, E4 et E5.
Les zones « aire A » et « aire B » correspondent à des réseaux locaux indépendants constitués des serveurs S1, S2 sur le réseau NET1 dans la zone A et S3, S4 sur le réseau NET3 dans la zone B.
Chaque zone ainsi constituée correspond à une architecture de réseau traditionnelle permettant d'établir des flux d'informations de type F1, F2. Ces flux correspondent donc au trafic associé aux protocoles échangés entre les terminaux et les serveurs. En absence de flux F3, les réseaux ainsi constitués sont totalement isolés et dans un tel cas, le routeur avec partie système d'exploitation pourrait être constitué de deux équipements indépendants de type routeur classique. Le terminal T sur une interface dédiée E0 représente la capacité d'administration de l'équipement. Dans le schéma proposé, le flux F3 fait partie d'un item de l'invention, il se caractérise, par exemple, par deux diodes logicielles et matérielles (F3.1 et F3.2 non représentées sur la figure pour des raisons de simplification) implémentant donc un trafic monodirectionnel. Ces diodes ont pour objet d'éviter que le trafic issu de l'aire A puisse transiter vers l'aire B.
Ce schéma donne un exemple de connectivité d'un équipement qui intègre une architecture de sécurité virtualisée.

La figure 9 A représente un mode de réalisation implémentant un mécanisme d'auto-contrôle du système de sécurité. Afin de s'assurer de la garantie d'exécution de la fonction de sécurité implémentée dans un sas disposé en coupure d'un bloc rouge 81 et d'un bloc noir, il est possible de mettre en place un mécanisme d'autocontrôle qui consiste à appliquer la fonction de sécurité, soit une fonction de chiffrement S₁ soit de déchiffrement S₋₁ au message ou données auquel la même fonction a été appliquée lors d'une précédente étape.
Ainsi sur la figure dans le cas où l'on souhaite transmettre des données du domaine A vers le domaine B de niveau de sécurité plus faible que celui de A, les données vont tout d'abord être transmises au bloc rouge 81 via la couche matérielle et de virtualisation 82 avant de passer en premier dans le premier sas de chiffrement 83 puis dans le deuxième sas de déchiffrement 84. Le flux de données chiffrées puis déchiffrées est ensuite transmis à un module de contrôle et de tests 85 adapté à vérifier que les données déchiffrées sont bien identiques aux données initiales à chiffre. Le contrôle peut consister en une analyse et une comparaison du code déchiffré. Ainsi, ce test garantit que le flux de données qui sort du domaine A est bien protégé dans le domaine B après passage dans le bloc noir 86 et le bloc 83.

Le mécanisme figure 9B schématise les étapes de l'organigramme de la figure 9A. La figure 9A avec son mécanisme décrit en 9B montre un système qui garantit que les flux sont correctement protégés (dans ce cas chiffré) avant d'aller dans un WAN (domaine public / domaine noir). D'autres systèmes de contrôle, de tests ou d'autotest peuvent améliorer la sécurité ou la sûreté de fonctionnement de l'équipement de sécurité.

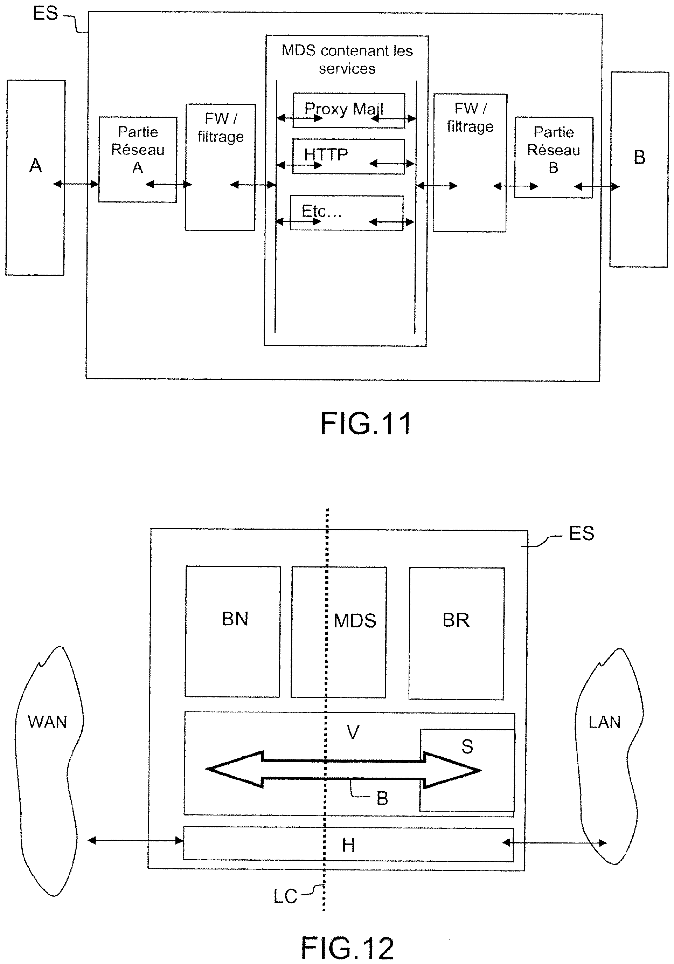

D'autres mécanismes de contrôle peuvent être implémentés comme dans les figures 10, 11 et 12. Les figures 10, 11 et 12 représentent un mécanisme de séparation spatio-temporelle des flux de niveaux de sensibilité différents. Il est important de mettre en oeuvre des mécanismes qui garantissent que les informations contenues dans l'ES virtualisé ne seront jamais mélangées à la fois dans l'espace et dans le temps tout en s'assurant que la configuration de l'outil de virtualisation est bien implémentée. C'est une propriété essentielle sur laquelle repose l'invention. La mise en place de cette propriété repose sur 1) des mécanismes matériels spécifiques (contrôleur d'accès mémoire, pagination / segmentation, gestion centralisée des interruptions, ...) et, 2) des mécanismes logiciels appropriés. Le fonctionnement de ces mécanismes connus de l'Homme du métier n'est pas décrit dans l'invention. En d'autres termes, cela impose deux types de protection qui se complètent :
- une protection spatiale : Figure 10. Des contrôleurs (ou dans cet exemple des automates de contrôle ACi: sorte de pare-feu ou filtre logiciel) sont en entrée de chaque bloc BR, MDS et contrôle chaque trame des flux entrant ou sortant (au moyen de tags ou de labels contenus dans les trames). Ces contrôleurs sont par exemple :
   ∘ des Modules de contrôle de mémoires : les mémoires ne doivent pas être partagés (partition, mémoire différentes, plages différentes ...),
   ∘ des Modules de coeur processeur (dans le cas d'un processeur multi-coeurs) alloué à un certain niveau de sécurité. Un coeur de processeur peut être alloué à un bloc,
   ∘ une protection spatiale de sécurité : Dans cet exemple le MDS peut contenir toutes les fonctions de sécurité ou encore l'équipement de sécurité peut comporter un MDS par service, (exemple : figure 11).
- une protection temporelle : figure 12
   ∘ elle utilise un séquenceur S / timer qui empêche qu'un même bus partagé B ou qu'un CPU travaille à la fois sur les données rouges ou noires. Le timer alloue des divisions temporelles à chaque compartiment afin qu'aucun flux ne soit mélangé à un autre d'un autre niveau de sécurité que le sien,
   ∘ elle permet d'éviter la création de canaux cachés temporels et l'exploitation de canaux auxiliaires reposant sur une mesure de temps de traitement ou du taux de disponibilité d'une ressource,
- une protection de configuration.
Les automates de contrôle filtrent tous les flux entrants ou sortants de chacun des blocs/compartiments.
Dans la figure 12, le séquenceur alloue un temps CPU ou d'accès au bus interne d'échanges de données.

La figure 11 schématise un exemple d'application de l'équipement de sécurité pour une passerelle. Dans cet exemple, la virtualisation et plus particulièrement les blocs de filtrage permettent de distinguer les flux entre eux : séparation spatiale. Ces derniers permettent aussi d'avoir une séparation temporelle qui peut s'implémenter de façon différente suivant les contraintes de sécurité et de réseaux. L'équipement de sécurité est positionné entre un domaine A de niveau de sécurité A et un domaine B de niveau de sécurité ou sensibilité B. Les flux issus de A passent via un bloc réseau A vers un module de filtrage FWA . En sortie du module de filtrage, les données sont transmises au MDS qui contient les différents services. Les blocs de filtrage FWx servent alors d'aiguilleur de flux vers les services désirés. Il peut y avoir autant de compartiments que de services. Il peut y avoir aussi des regroupements de service dans un seul compartiment. Puis les données sont transmises à un deuxième module de filtrage FWB avant d'être envoyées dans une partie B du réseau et vers le domaine B.

La figure 12 illustre plus particulièrement la couche de virtualisation, avec le séquenceur S, le bus d'échanges B.

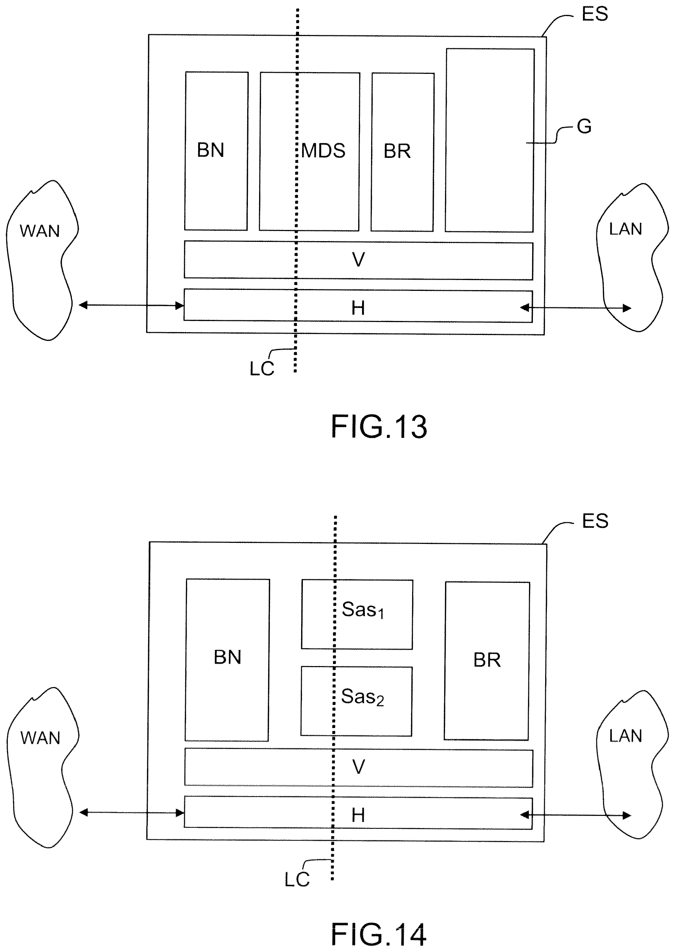

La figure 13 montre qu'un compartiment supplémentaire peut être ajouté afin d'offrir des services d'administration G de l'équipement de sécurité (comme l'IHM, le déport de supervision afin que l'opérateur ou l'administrateur réseau puisse vérifier le bon fonctionnement de l'équipement, etc...).

La figure 14 montre un équipement de sécurité virtualisé qui a un compartiment supplémentaire pour augmenter la fiabilité et par conséquent la sécurité de fonctionnement de la transformation de sécurité (figure proche de la figure 9A). Dans les deux sas MDS1, MDS2, séparant le bloc rouge et le bloc noir BR, BN, les mêmes programmes ou traitement de sécurité s'exécutent avec un léger décalage dans le temps : ainsi, une fois les traitements achevés les résultats sont comparés. Quand les résultats sont identiques alors le flux (par exemple chiffrés) sort de l'équipement, s'il n'est pas identique alors il ne sort pas de l'équipement. Ainsi s'ils subissent une attaque ou une intrusion à un instant donné, les deux processus ne sont pas perturbés de la même manière car ils n'exécutent pas le même traitement à un instant t du fait du petit décalage temporel.

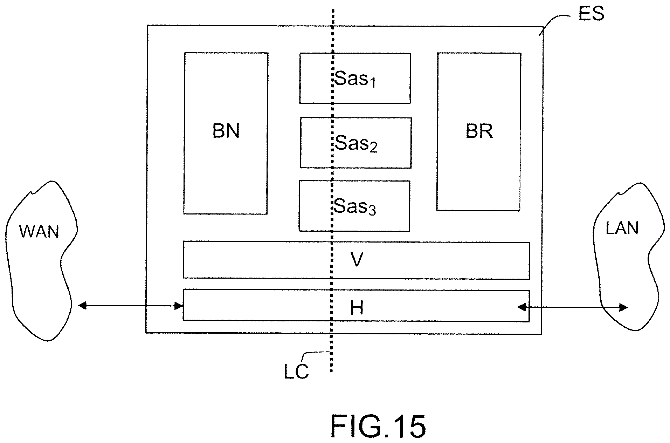

Des mécanismes similaires illustrés à la figure 15, peuvent être utilisés avec trois sas (ou MDS) Sas1, Sas2, Sas3, séparant le bloc rouge BR et le bloc noir BN qui exécutent les mêmes traitements mais un vote majoritaire est effectué à la fin de ceux-ci : si deux résultats au moins sont identiques alors le traitement a réussi sinon c'est l'échec et l'équipement se fige (il bloque toute communication après avoir envoyé à son centre de gestion ou de supervision une alarme).

## Revendications

1. Equipement de sécurité ES disposé à être positionné entre au moins un premier domaine ayant un premier niveau de sensibilité A et au moins un deuxième domaine ayant un deuxième niveau de sensibilité B, sachant que le niveau de sécurité A est différent du niveau de sécurité B, **caractérisé en ce qu'**il comporte au moins les éléments suivants :
• une couche matérielle physique H et plusieurs interfaces I permettant l'échange de données entre ledit équipement de sécurité et les différents domaines A, B, un flux de données étant émis du premier domaine ayant un niveau de sensibilité A, transite par la couche matérielle physique H et par une couche de virtualisation V, puis par un bloc sas et enfin arrive au deuxième domaine ayant un niveau de sensibilité B,
• la couche de virtualisation V est implémentée sur la couche physique H et disposée entre ladite couche physique H et au moins un ensemble constitué d'au moins trois blocs compartimentés, BLA, BLB, MDS, lesdits blocs compartimentés reposant sur la couche physique H et la couche de virtualisation, les au moins trois blocs compartimentés ne sont pas dans la couche de virtualisation, et lesdits blocs étant constitués d'au moins un des éléments pris parmi la liste suivante :
• un bloc logiciel A, BLA, comportant l'ensemble des fonctions réseaux permettant de traiter des données de niveau de sécurité A,
• un bloc logiciel B, BLB, comportant l'ensemble des fonctions réseaux permettant de traiter des données de niveau de sécurité B,
• un bloc logiciel Module de sécurité, MDS, ou sas disposé entre au moins un bloc de type BLA et au moins un bloc de type BLB, ledit module de sécurité étant adapté à contrôler les échanges de données entre lesdits blocs BLA et BLB, ledit module de sécurité MDS comportant l'ensemble des transformations de sécurité, de filtrage ou de fonctions cryptographiques.

2. Equipement de sécurité selon la revendication 1, **caractérisé en ce qu'**un équipement de sécurité comporte les fonctions adaptées à gérer l'échange des flux de données entre les différents blocs de la manière suivante :
• les échanges entre le domaine A et le bloc logiciel BLA,
• les échanges entre le bloc logiciel BLA et un module de sécurité MDS,
• les échanges entre un module de sécurité MDS et le bloc logiciel BLB,
• les échanges entre le bloc logiciel BLB et le domaine B.

3. Equipement de sécurité selon l'une des revendications 1 ou 2, **caractérisé en ce que** chacun des domaines A, B est en liaison avec un sous-réseau ou un réseau LANi, WANi et **en ce que** les blocs logiciels BLA et BLB sont des blocs Réseaux BRA et BRB.

4. Equipement de sécurité selon l'une des revendications 1 à 3, **caractérisé en ce qu'**un module de sécurité MDS comporte des fonctionnalités choisies parmi les suivantes : un chiffreur IP ou autre et/ou un pare-feu et/ou d'une diode et/ou de détection d'intrusion et/ou d'analyse de flux.

5. Equipement de sécurité selon l'une des revendications 1 à 4, **caractérisé en ce qu'**il comporte un nombre x de blocs de sécurité A, un nombre de modules de sécurité égal à x, un nombre y de blocs de sécurité de niveau B, avec A différent de B.

6. Equipement de sécurité selon l'une des revendications 1 à 5, **caractérisé en ce que** le module de sécurité MDS est disposé de façon telle que le parcours des flux de données dans un équipement de sécurité ES est le suivant : le flux FI comprenant initialement des données sensibles en clair est un flux sortant partant du domaine B vers le domaine A, il passe à travers la couche physique H et la couche de virtualisation V, avant de transiter par le bloc réseau rouge (52), puis transmis au bloc de sécurité (51) de cryptographie des flux sortants, les données chiffrées sont ensuite transmises au bloc réseau noir (50) avant d'être transmise au domaine A et **en ce que** un flux FII part du domaine A et transmis via la couche physique H et la couche de virtualisation V dans le bloc rouge (52), puis transmis au bloc MDS (53) dans lequel les données sont déchiffrées.

7. Equipement de sécurité selon l'une des revendications précédentes, **caractérisé en ce qu'**il comporte un module administrateur (77, G) dudit équipement de sécurité.

8. Equipement de sécurité selon l'une des revendications précédentes, **caractérisé en ce que** le nombre de bloc module de sécurité MDS est égal au nombre de niveau de sécurité ou au nombre de blocs de niveau de sécurité présents dans ledit équipement de sécurité.

9. Equipement de sécurité selon la revendication 8, **caractérisé en ce que** le nombre de niveau de sécurité est égal au nombre de niveau de bloc rouge.

## Patentansprüche

1. Sicherheitsvorrichtung ES, angeordnet zum Positionieren zwischen wenigstens einer ersten Domäne mit einem ersten Empfindlichkeitsniveau A und wenigstens einer zweiten Domäne mit einem zweiten Empfindlichkeitsniveau B, wissend, dass sich das Sicherheitsniveau A vom Sicherheitsniveau B unterscheidet, **dadurch gekennzeichnet, dass** sie wenigstens die folgenden Elemente umfasst:
• eine physische Hardware-Schicht H und mehrere Schnittstellen I, die den Austausch von Daten zwischen der Sicherheitsvorrichtung und den unterschiedlichen Domänen A, B zulassen, wobei ein Fluss von Daten von der ersten Domäne mit einem ersten Empfindlichkeitsniveau A ausgesendet wird und durch die physische Hardware-Schicht H und durch eine Virtualisierungsschicht V, dann durch einen Schleusenblock geht und schließlich in der zweiten Domäne mit einem Empfindlichkeitsniveau B ankommt,
• die Virtualisierungsschicht V wird auf der physischen Schicht H implementiert und ist zwischen der physischen Schicht H und wenigstens einer Baugruppe angeordnet, die von wenigstens drei unterteilten Blöcken BLA, BLB, MDS gebildet wird, wobei die unterteilten Blöcke auf der physischen Schicht H und der Virtualisierungsschicht ruhen, wobei die wenigstens drei unterteilten Blöcke nicht die Virtualisierungsschicht sind und die Blöcke von wenigstens einem der Elemente gebildet sind, ausgewählt aus der folgenden Liste:
• einem Software-Block A, BLA, der die Baugruppe von Netzwerkfunktionen umfasst, die das Verarbeiten der Daten mit Sicherheitsniveau A zulassen,
• einem Software-Block B, BLB, der die Baugruppe der Netzwerkfunktionen umfasst, die das Verarbeiten von Daten von Sicherheitsniveau B zulassen,
• einem Software-Block Sicherheitsmodul MDS oder Schleuse, angeordnet zwischen wenigstens einem Block des BLA-Typs und wenigstens einem Block des BLB-Typs, wobei das Sicherheitsmodul zum Steuern der Austausche von Daten zwischen den Blöcken BLA und BLB ausgelegt ist, wobei das Sicherheitsmodul MDS die Gesamtheit der Sicherheits-, Filterungs- oder kryptografischen Funktionen umfasst.

2. Sicherheitsvorrichtung nach Anspruch 1, **dadurch gekennzeichnet, dass** eine Sicherheitsvorrichtung Funktionen umfasst, ausgelegt zum Verwalten des Austauchs von Datenflüssen zwischen den unterschiedlichen Blöcken auf die folgende Weise:
• die Austausche zwischen der Domäne A und dem Software-Block BLA,
• die Austausche zwischen dem Software-Block BLA und einem Sicherheitsmodul MDS,
• die Austausche zwischen einem Sicherheitsmodul MDS und dem Software-Block BLB,
• die Austausche zwischen dem Software-Block BLB und der Domäne B.

3. Sicherheitsvorrichtung nach Anspruch 1 oder 2, **dadurch gekennzeichnet, dass** jede der Domänen A, B mit einem Subnetz oder einem LANi, WANi Netzwerk verbunden ist, und dadurch, dass die Software-Blöcke BLA und BLB Netzwerk-Blöcke BRA und BRB sind.

4. Sicherheitsvorrichtung nach einem der Ansprüche 1 bis 3, **dadurch gekennzeichnet, dass** ein Sicherheitsmodul MDS Funktionalitäten umfasst, die aus den Folgenden ausgewählt sind: einem IP- oder sonstigen Encoder und/oder einer Firewall und/oder einer Diode und/oder einem Eindringdetektor und/oder einem Flussanalysator.

5. Sicherheitsvorrichtung nach einem der Ansprüche 1 bis 4, **dadurch gekennzeichnet, dass** sie eine Anzahl x von Sicherheitsblöcken A, eine Anzahl von Sicherheitsmodulen gleich x, eine Anzahl y von Sicherheitsblöcken von Niveau B umfasst, wobei sich A von B unterscheidet.

6. Sicherheitsvorrichtung nach einem der Ansprüche 1 bis 5, **dadurch gekennzeichnet, dass** das Sicherheitsmodul MDS auf eine solche Weise angeordnet ist, dass der Verlauf von Datenflüssen in einer Sicherheitsvorrichtung ES wie folgt ist: der Fluss FI, der anfänglich empfindliche Daten unverschlüsselt umfasst, ist ein Fluss, der von Domäne B ausgeht und zu Domäne A geht, durch die physische Schicht H und die Virtualisierungsschicht V geht, vor dem Transit durch den roten Netzwerkblock (52), dann übertragen wird zum Sicherheitsblock (51) des Verschlüsselns von Ausgangsflüssen, wobei die codierten Daten dann zum schwarzen Netzwerkblock (50) übertragen werden, bevor sie zur Domäne A übertragen werden, und dadurch, dass ein Fluss FII Domäne A verlässt, über die physische Schicht H und die Virtualisierungsschicht V im roten Block (52) und dann zum MDS-Block (53) übertragen wird, in dem die Daten decodiert werden.

7. Sicherheitsvorrichtung nach einem der vorherigen Ansprüche, **dadurch gekennzeichnet, dass** sie ein Administratormodul (77, G) der Sicherheitsvorrichtung umfasst.

8. Sicherheitsvorrichtung nach einem der vorherigen Ansprüche, **dadurch gekennzeichnet, dass** die Anzahl von Sicherheitsmodulblöcken MDS gleich der Anzahl von Sicherheitsniveaus oder der Anzahl von Sicherheitsniveaublöcken ist, die in der Sicherheitsvorrichtung vorhanden sind.

9. Sicherheitsvorrichtung nach Anspruch 8, **dadurch gekennzeichnet, dass** die Anzahl von Sicherheitsniveaus gleich der Anzahl von roten Blockniveaus ist.

## Claims

1. A security apparatus ES arranged to be positioned between at least a first domain having a first sensitivity level A and at least a second domain having a second sensitivity level B, bearing in mind that the security level A is different from the security level B, **characterized in that** it comprises at least the following elements:
• a physical material layer H and a plurality of interfaces I allowing for the exchange of data between said security apparatus and the various domains A, B, a data flow being emitted from the first domain having a sensitivity level A, transits via the physical material layer H and via a virtualization layer V, then via an airlock block and eventually arrives at the second domain having a sensitivity level B,
• the virtualization layer V is implemented on the physical layer H and positioned between said physical layer H and at least a set consisting of at least three compartmentalized blocks, BLA, BLB, MDS, said compartmentalized blocks resting on the physical layer H and the virtualization layer, said at least three compartmentalized blocks are not in the virtualization layer, and said blocks consisting of at least one of the elements taken from the following list:
• a software block A, BLA, comprising the set of network functions allowing to process data of security level A,
• a software block B, BLB, comprising the set of network functions allowing to process data of security level B,
• a security module software block, MDS, or airlock positioned between at least one block of BLA type and at least one block of BLB type, said security module being designed to monitor the exchanges of data between said blocks BLA and BLB, said security module MDS comprising all the security, filtering or cryptographic function transformations.

2. The security apparatus according to claim 1, **characterized in that** a security apparatus comprises functions suitable for managing the exchange of the data flows between the various blocks as follows:
• the exchanges between the domain A and the software block BLA,
• the exchanges between the software block BLA and a security module MDS,
• the exchanges between a security module MDS and the software block BLB,
• the exchanges between the software block BLB and the domain B.

3. The security apparatus according to one of claims 1 or 2, **characterized in that** each of the domains A, B is linked to a subnetwork or a network LANi, WANi and **in that** the software blocks BLA and BLB are network blocks BRA and BRB.

4. The security apparatus according to one of claims 1 to 3, **characterized in that** a security module MDS includes functionalities chosen from the following: an IP encryptor or similar and/or a firewall and/or a diode and/or intrusion detection and/or flow analysis.

5. The security apparatus according to one of claims 1 to 4, **characterized in that** it comprises a number x of security blocks A, a number of security modules equal to x, a number y of security blocks of level B, with A different from B.

6. The security apparatus according to one of claims 1 to 5, **characterized in that** the security module MDS is positioned so that the path taken by the data flows in a security apparatus ES is as follows: the flow FI initially comprising uncoded sensitive data is an outgoing flow leaving the domain B toward the domain A, it passes through the physical layer H and the virtualization layer V, before transiting via the red network block (52), is then transmitted to the cryptography security block (51) for the outgoing flows, the encrypted data are then transmitted to the black network block (50) before being transmitted to the domain A and **in that** a flow FII leaves the domain A and is transmitted via the physical layer H and the virtualization layer V into the red block (52), then transmitted to the MDS block (53) in which the data are decrypted.

7. The security apparatus according to one of the preceding claims, **characterized in that** it includes an administrator module (77, G) of said security apparatus.

8. The security apparatus according to one of the preceding claims, **characterized in that** the number of security module blocks MDS is equal to the number of security levels or to the number of security level blocks present in said security apparatus.

9. The security apparatus according to claim 8, **characterized in that** the number of security levels is equal to the number of red block levels.
